# EUROPEAN PATENT APPLICATION

(11) **EP 4 485 912 A1**
(43) Date of publication of application: **01.01.2025**
(21) Application number: 23182474.9
(22) Date of filing: 29.06.2023
(51) Int. Cl.: H04M 3/22, H04M 3/42

(54) **A METHOD FOR CENTRALLY STORING AT LEAST ONE USER RELATED CALL HISTORY LIST IN A CLOUD-BASED COMPUTING SYSTEM**

(71) Applicant: Deutsche Telekom AG, 53113 Bonn (DE)
(72) Inventor: THIES, Emil, 47166 Duisburg (DE); HELLWIG, Jens, 68642 Bürstadt (DE)
(74) Representative: Blumbach · Zinngrebe Patentanwälte PartG mbB

(57) **Abstract**

The present invention is directed to a method for centrally storing at least one user related call history list in a first cloud-based computing system (110), wherein the method comprises the steps of:
a) Generating for an incoming and/or outgoing telephone call with respect to at least one telephony-capable terminal device (140) connectable to a telecommunication system (10) and associated with a user at least one call event message, each call event message including a unique identification of the respective user and an event type indicating a specific state of the respective telephone call;
b) Transmitting, via an IP-based data connection, each of the call event message generated at step a) to the first cloud-based computing system (110); and
c) Storing, in a storage (113) of the first cloud-based computing system (110), each received call event message in dependence of the included unique identification of the respective user in a call history list associated with the respective user.

## Description

### Technical Field of the Invention

The present invention relates to a method for centrally storing at least one user related call history list in a first cloud-based computing system including at least one storage, at least one control unit and an IP-based communication interface, wherein the cloud-based computing system is configured to be connectable to a telecommunication system, which is configured to handle telephone calls, wherein at least one telephony-capable terminal device associated with a first user and at least one telephony-capable terminal device associated with a second user is connected to the telecommunication system.

### Background of the Invention

Modern telephones, telephone systems, smartphones or apps with a telephony function implemented for example on a PC (also called a softphone) each may generate and update its own local call history list including call events associated with the respective end device or telephony app.

As long as a customer or user deploys only one end device and/or telephony app, a consistent call history list can be provided by the respective end device and/or telephony app. However, as soon as the customer uses several end devices, the customer only has a partial view at the several end devices, which may be inconsistent or even incorrect.

It is an object of the present invention to provide a method for centrally storing at least one user related call history list in a first cloud-based computing system which provides a complete and consistent view of all telephony activities of at least one user even if the user deploys several telephony-capable terminal devices and/or is using several telecommunication networks from different operators.

### Summary of the Invention

A core aspect of the invention can be seen in providing a method for centrally storing at least one user related call history list in a cloud-based computing system, wherein the call history list may be filled with call event messages and information elements, respectively, associated with at least one call of the respective user, wherein the call event messages are preferably received from at least one source, but preferably from different sources, e.g. several telephony-capable terminal devices associated with the respective user, and/or network elements of the telecommunication system used, each of the different sources having its own incomplete view of the user's telephony activities. Preferably, the cloud-based computing system is configured to consolidate all received call event messages associated with the respective user into a consistent call history list representing a view of the user's telephony activities and makes it available for the respective user. In this way, the different sources of the respective user and further touchpoints can benefit from a consistent call history list and the cloud-based computing system always provides the respective user with consistent call event messages or information elements with respect to a respective call.

A further preferred aspect can been seen in providing an online call history list of at least one user by the cloud-based computing system in particular for transmission to the respective user and to its at least one telephony-capable terminal device, respectively.

The above mentioned technical problem is solved by the features of claim 1.

Therefore, a method for centrally storing at least one user related call history list in a first cloud-based computing system including at least one storage, at least one control unit and at least one IP-based communication interface is provided, wherein the cloud-based computing system is configured to be connectable to a telecommunication system, which is configured to handle telephone calls and preferably to support transmission of IP-data packets, wherein the method preferably comprises the steps of:
a) Generating for an incoming and/or outgoing telephone call with respect to at least one telephony-capable terminal device connectable to the telecommunication system and associated with a user at least one call event message, each call event message including a unique identification of the respective user and an event type indicating a specific state of the respective telephone call;
b) Transmitting, via an IP-based data connection, each of the call event message generated at step a) to the first cloud-based computing system; and
c) Storing, in the at least one storage of the first cloud-based computing system, each received call event message in dependence of the included unique identification of the respective user in a call history list associated with the respective user.

An incoming or outgoing call can be for example an internal call between a calling device and a called device connected to an in-house or private telecommunication system or an external call via at least one public telecommunication network.

It is to be noted, that a telephony-capable terminal device may be, for example any digital or analog telephone, mobile phone, computing device acting as a softphone or a DECT (Digital Enhanced Cordless Telecommunications) base station and/or a DECT terminal. Furthermore, the telecommunication system may comprise a landline or fixed network, for example a public switched telephone network, i.e. a PSTN, and/or a mobile network implementing any mobile radio standard, e.g. UMTS (Universal Mobile Telecommunications System), LTE (Long term Evolution) or 5G, and/or an IP-based data network, for example the Internet, and/or an IP Multimedia Subsystem and/or a Next Generation Network (NGN).

Preferably, the method further comprises the step of:
d) providing, at the first cloud-based computing system, at least one of the call event messages stored at step c) for transmitting via an IP-based data connection to a destination. The destination may be the at least telephony-capable terminal device associated with respective user and/or a further cloud-based computing system or any other device configured to get access to the first cloud-based computing system and to retrieve at least one of the call event messages stored at step c).

Preferably, step a) comprises the step of generating for an incoming and/or outgoing telephone call with respect to at least two telephony-capable terminal devices connectable to the telecommunication system and associated with the respective user a plurality of call event messages, each call event message including a unique identification of the respective user, a unique identification of the respective telephony-capable terminal device of the at least two telephony-capable terminal devices and an event type indicating a specific state of the respective telephone call.

In order to provide a reliable operation even if different telecommunication technologies and different telephony-capable terminal devices are involved, each call event message transmitted at step b) preferably uses a first predefined dataset format, which comprises a plurality of data fields, each data field is configured to record a separate information element of the respective call event message generated at step a), wherein each call event message is stored at step c) preferably in a second predefined dataset format, which comprises a plurality of data fields, wherein at least some of said data fields are each configured to record a separate information element of the respective call event message generated at step a), and wherein
the at least one call event message is provided at step d) preferably in a third predefined dataset format, which comprises a plurality of data fields, wherein at least some of said data fields are each configured to record a separate information element of the respective call event message generated at step a), wherein the first, second and third dataset formats are different.

Preferably, each call event message generated at step a) comprises the following information elements: an information on the direction of the respective telephone call, wherein the information indicates an incoming telephone call or an outgoing telephone call, a first timestamp associated with the beginning of the respective telephone call.

Each call event message generated at step a) may further comprises the following information elements: a call number associated with the respective user and/or a call number associated with a user acting as a communication partner of the respective user and/or a unique identification of the entity, which has generated and/or transmitted the respective call event message, and/or a call identification associated with the respective telephone call and/or a further timestamp indicating the time when the specific state of the respective telephone call occurred.

Preferably, the method comprises the step of determining, at the first cloud-based computing system, with respect to the at least one telephony-capable terminal device associated with the respective user the duration of the respective telephone call in dependence of the first timestamp and the further timestamp, if the further timestamp is associated with the termination state of the respective telephone call, and storing the duration in the call history list associated with the respective user, wherein the duration is recorded in predefined data field of a call event message provided at step d).

Preferably steps a) and b) may be executed by the at least one telephony-capable terminal device associated with the respective user. In this case the at least one telephony-capable terminal device comprises an IP-based communication interface configured to transmit and receive call event messages data via an IP-based data connection.

Alternatively or additionally, step a) may be executed by the at least one telephony-capable terminal device associated with the respective user and step b) comprises the steps of: first transmitting, via an IP-based data connection, each of the generated call event message from the at least one telephony-capable terminal device associated with the respective user to a second cloud-based computing system and then transmitting each of the generated call event message from the second cloud-based computing system via an IP-based data connection to the first cloud-based computing system. Preferably, the second cloud-based computing system operates as a cloud-based backup system for some telephony-capable terminal device date, which may include the local device call history.

Alternatively or additionally, step a) may be executed by the at least one telephony-capable terminal device associated with the respective user and thereafter each call event message generated at step a) may be transmitted preferable via a point-to-point connection to a communication device having an IP-based wireless or wired communication interface, e.g. a notebook or a smart speaker installed at a user's premises, associated with the respective user and step b) comprises the steps of transmitting each of the generated call event message from the communication device via an IP-based data connection over the telecommunication system to the first cloud-based computing system. This measure is used in particular, if the at least one telephony-capable terminal device is not capable to perform an IP-based communication.

Alternatively or additionally, steps a) and b) may be executed by the telecommunication system, e.g. by respective network elements like router, local or trunk exchanges each implementing functionalities to perform steps a) and b).

In a preferred embodiment, the at least one telephony-capable terminal device associated with the respective user may be connected to a home router associated with the respective user and steps a) and b) are executed by the home router. For example, the home router can be configured to handle and control an internal call between two telephony-capable terminal devices associated with the respective user and connected to the home router.

In order to keep the call history lists stored on the first cloud-based computing system updated or to create a new call history list properly the method may further comprise the steps of:
checking, before executing step c), each received call event message by the first cloud-based computing system, whether the respective call event message is correlated with at least one call event message already stored in the call history list associated with the respective user and, if a correlation is detected, updating the call history list associated with the respective user. For example, a correlation is detected, if a currently checked call event message is associated with the same user and the same call as an already stored call event message.

Preferably, each call event message stored at step c) is checked by the first cloud-based computing system for consistency and if an inconsistency is detected a single consistent call event message may be generated for the respective call by the first cloud-based computing system. In particular, the consistent call event message is provided at step d) in the third predefined dataset format. For example, a consistency check is useful, if an incoming call is signaled to several telephony-capable terminal devices associated with the respective user and only accepted by one of the several telephony-capable terminal devices. This may lead to several call event messages stored on the first cloud-based computing system, wherein only one call event message indicates an accepted call and the remaining call event messages each indicate a missed call. If such an inconsistency is detected, the first cloud-based computing system is configured to overcome the inconsistency for example by revising the respective call history list and generating a single consistent call event message indicating that the respective call has been accepted by the respective user.

In a preferred embodiment, step a) comprises for example the following steps: Generating for an incoming and/or outgoing telephone call with respect to the at least one telephony-capable terminal device associated with the respective user
- a first call event message, which comprises a first timestamp indicating the beginning of the respective telephone call and a first predefined event type indicating that the establishment of the respective telephone call has been initiated;
- only if the respective telephone call has not been established, in response thereto a second predefined event message, which comprises a second predefined event type indicating that the establishment of the respective telephone call has been canceled and optionally the user and/or the telephony-capable terminal device canceling the respective telephone call, and/or, if available, generating, a third call event message, which comprises a third predefined event type indicating that the telephone call connection has been forwarded e.g. to a voice mail system or another number;
- only if the respective telephone call has been established, in response thereto a fourth call event message, which comprises a fourth predefined event type indicating that the respective telephone call has been accepted, and in response to the release of the respective telephone call a fifth call event message, which comprises a fifth predefined event type indicating that the respective telephone call has been terminated and a further timestamp indicating the end of the respective telephone call.

### Brief Description of the Drawings

The invention is illustrated by way of example in connection with the accompanying drawings, wherein
- Figure 1: shows an exemplary telecommunication system connected to a first cloudbased computing system configured to centrally store and provide history call lists,
- Figure 2: shows a diagram of an exemplary call establishment between a first and a second telephony-capable terminal devices, and
- Figure 3: shows a diagram of an exemplary call establishment between a first telephony-capable terminal device and several telephony-capable terminal devices installed at a user's premises.

### Detailed Description of the Invention

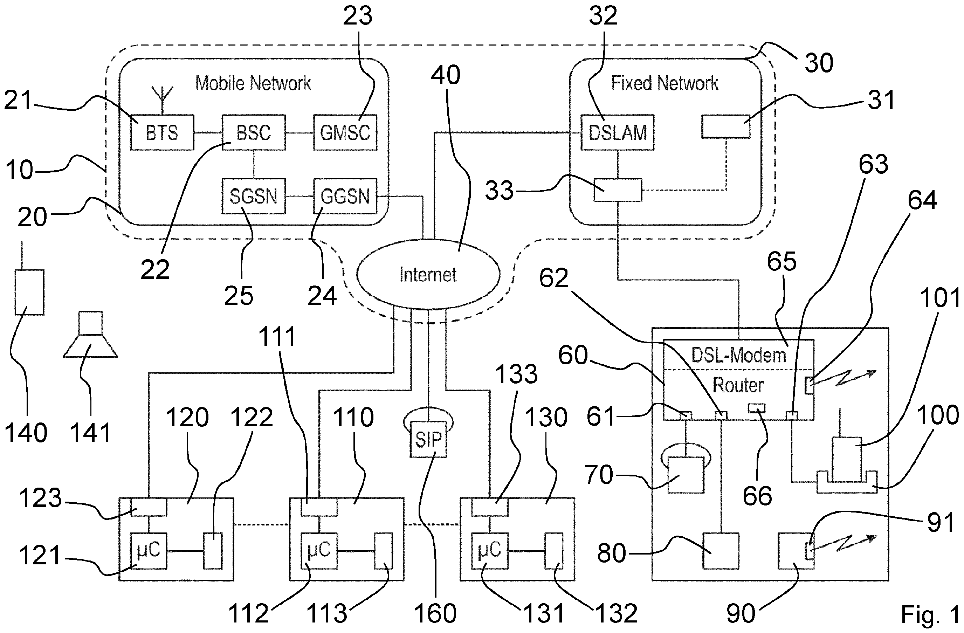

Figure 1 depicts an exemplary telecommunication system 10, which is preferably configured to handle several telephone calls and to support transmission of IP-data packets. In the exemplary embodiment, the telecommunication system 10 may comprise a mobile network 20 implementing a mobile communications standard, for example the GSM (Global Systems for Mobile Communications) standard, a landline or fixed network 30, for example a public switched telephone network (PSTN) and as an IP-based data network 40 the Internet. It is exemplary assumed, that both the mobile network 20 and the Internet 40 uses the Session Initiation Protocol (SIP) to exchange signaling information to establish, control and release telephone calls, whereas the fixed network 30 uses for example the signaling system no 7 (SS7) to exchange signaling information to establish, control and release telephone call. Both signaling systems are well known to a person skilled in the art. As will be explained later in detail call event messages are preferably generated in dependence of the current signaling information which are exchanged during the setup, controlling and terminating or interruption of a telephone call and/or in dependence of predefined user activities like pick up or hanging up a telephone. It is noted, that a plurality of different telephony-capable terminal devices associated to a plurality of users can be connected to the telecommunication system 10. At least some of the plurality of different telephony-capable terminal devices can be configured to communicate with first cloud-based computing system 110, which is connected to the Internet 40, in a manner as illustrated below.

The cloud-based computing system 110 comprises at least one controller 112 for controlling and monitoring the functions of the cloud-based computing system 110 and at least one storage or database 113. A software and/or cloud application may be installed on the cloud-based computing system 110, which, if executed by the controller 112, preferably causes the cloud-based computing system 110 to
- receive and centrally collect call event messages, wherein each call event message uses a first predefined dataset format,
- to centrally store, in the at least one storage 113 of the first cloud-based computing system 110 the received call event messages in a second predefined dataset format in at least one call history list associated with the respective user the call event message belongs to, for example the first or second user, and
- to provide at least some of the stored call event messages in a third predefined dataset format to be transmitted for example to the first or second user and/or to a third cloud-based computing system 130 for further processing. Therefore, the third cloud-based computing system 130 comprises at least one controller 131, at least one storage 132 and at least one IP-based communication interface configured to communicate via the Internet 40.

Therefore, it is a preferred task of the cloud-based computing system 110 to centrally store and provide online call history lists of a plurality of users, wherein each of the users may use at least one telephony-capable terminal device.

Furthermore, the cloud-based computing system 110 comprises a communication interface 111 connectable to the Internet 40, wherein the communication interface 111 implements an application programmable interface (API) that is configured to receive call event messages in the first dataset format, to transform the first dataset format into the second dataset format and to provide call event messages in the third dataset format for transmission. In addition, at least one IP-address is associated with the cloud-based computing system 110, which is known to the first and second user. The controller 112 is preferably configured to check each of the received call event messages, whether the respective received call event message correlates with at least some of the stored call event messages, and if so, to update the respective call history list stored, and if not, to store it as a new call event message for example in a new call history list. The term "correlates" means for example, that a newly received call event message belongs to at least one already stored call event message associated with a respective call and/or a respective user.

The exemplary mobile network 20 is schematically depicted in Figure 1 and comprises at least a Base Station Transceiver (BTS) 21 with an antenna for communicating for example with a smartphone 140 and/or a computing device 141 associated with a first user or customer. The computing device141 may be a notebook, wherein a telephony app may be implemented thereon. Furthermore, the exemplary mobile network 20 may comprise at least a Base Station Controller (BSC) 22, which is connected to a Gateway Mobile Switching Center (GMSC) 23, which belongs to a telephony-based core network of the mobile network 20. The telephony-based core network of the mobile network 20 is connected via the GMSC 23 to the fixed network 30, in order to handle telephone calls there between. In addition, the BSC 22 can be connected to a Service GPRS Support Node (SGSN) 25 and a Gateway GPRS Support Node (GGSN) 24, which belong to an IP-based core network of the mobile network 20. The GGSN 24 connects the IP-based core network of the mobile network 20 to the Internet 40. GPRS is the abbreviation for General Packet Radio Service.

The exemplary fixed network 30 may comprise a plurality of network nodes or elements e.g. local and trunk exchanges (not shown) and a voicemail system 31 to which a not accepted call can be forwarded in a known manner. Such a voicemail system can be alternatively or additionally installed in the mobile network 20. At least some of the local exchanges may comprise a Digital Subscriber Line Access Multiplexer (DSLAM) 32, which is configured to connect for example a home router 60 of the first user to the Internet 40. In the exemplary embodiment, a splitter 33 is used to deliver IP-data packets to the DSLAM 32 and analog or ISDN telephony signals to the telephony core network of the fixed network 30.

Figure 1 further depicts for example a user's home network 50 associated with the first user, wherein the home network 50 is installed for example on the premises of the first user and comprises at least one connection to the fixed network 30. The user's home network 50 may be based on various communication technologies, e.g. analog and/or digital technologies. The home network 50 may comprise for example several telephony-capable terminal devices, a home router 60 and a smart speaker 90, which for example is configured to communicate via a WLAN interface 64 of the home router 60 over the Internet 40 with cloud-based services. The telephony-capable terminal devices associated with the first user comprise for example an analog or ISDN telephone 70, a VoIP telephone 80 and at least one DECT telephone 101. The home network 50 can be connected to the fixed network 30 and/or the Internet 40 in a known manner via the router 60. Therefore, a DSL modem 65 may be implemented in the home router 60, connecting the home router 60 to a digital subscriber line, which is terminated by the DSLAM 32 of the fixed network 30. Of course, a laptop would be possible to connect to the fixed network 30, too.

In a preferred embodiment, the home router 60 is configured to transmit call event messages associated with the ISDN telephone 70, and/or the VoIP telephone 80 and/or the DECT telephone 101 to the cloud-based computing system 110. Therefore, an Internet Access Device (IAD), and/or a SIP telephony client 62 and/or a DECT base 66 for connection to the DECT telephone 101, and/or an analog telephone port / ISDN port 61 for connection to the wired ISDN telephone 70 can be implemented in the home router 60. For example, the home router 60 may be configured to generate for each incoming or outgoing call with respect to the involved terminal devices 70, 80 and/or 101 respective call event messages and deliver them via an IP-connection via the DSL modem 65 and over the Internet 40 to the cloud-based computing system 110. If an incoming and outgoing call is handled or controlled by the home router 60 between telephony-capable terminal devices of the home network 50, e.g. between the ISDN telephone 70 and the DECT telephone 101 the home router 60 can be configured to generate with respect to the ISDN telephone 70 and the DECT telephone 101 call event messages indicating that the incoming and outgoing call, respectively, is an internal call.

Alternatively, the home router 60 may be configured to receive in a push or pull mode call event messages stored on each of the terminal devices 70, 80, and/or 101 and transmit them using in particular the first predefined dataset format via an IP-connection over the DSL modem 65 to the cloud-based computing system 110. In this case, none of the terminal devices 70, 80 and 101 have to comprise an IP-based interface for transmitting call event messages to the cloud-based computing system 110.

If a DECT base is not integrated in the home route 60, a separate DECT base station 100 can be connected to a communication interface 63 of the home router 60. The DECT base station 100 communicates in a known manner with the at least one DECT telephone 101.

At this point, it is worth to note that call event messages are transmitted in IP data packets, which include in their header the known destination IP-address of the cloud-based computing system 110 and the IP source address of the device transmitting the respective call event message.

In dependence of the implementation, the home router 60, and/or the telephony-capable terminal devices and/or network elements and nodes of the mobile network 20, and/or the fixed network 30 and/or the Internet 40 may generate call event messages associated with respective calls and telephony-capable terminal devices involved in the respective calls and transmit them via respective IP-based data connections to the first cloud-based computing system 110.

In an exemplary embodiment, the smartphone 140, and/or the notebook 141, and/or the SIP-based telephone 160, and/or the ISDN-based telephone 70, and/or the VoIP-based telephone 80, and/or the DECT telephone 101 can be configured to generate for an incoming and/or outgoing telephone call at least one call event messages and to transmit each of the generated call event message via an IP-based data connection to the first cloud-based computing system 110, wherein each of the transmitted call event message comprises at least a unique identification of the respective user handling as a calling party or called party and a respective event type of a set of predefined event types . Since the ISDN telephone 70 and the DECT telephone 101 do not have basically an IP-based communication interface, they have to be modified respectively. For example, a WLAN-capable interface can be implemented at both the ISDN telephone 70 and the DECT telephone 101, which are configured to transmit each of the generated call event messages via an IP-based data connection over the WLAN interface 64 of the home router 60 to the first cloud-based computing system 110.

In addition, the smartphone 140, and/or the notebook 141, and/or the SIP-based telephone 160, and/or the ISDN-based telephone 70, and/or the VoIP-based telephone 80, and/or the DECT telephone 101 can be configured to generate for incoming and/or outgoing calls a local call history list including call event messages. These functions can be realized by integrating a software module into the operating system running on each of the telephony-capable terminal devices 70, 80, 140, 141 and 160 or by installing a supplementary app, which for example itself provides a so-called OTT (over the top content) telephony for transmitting data over the Internet 40.

In particular, the telephony-capable terminal devices 70, 80, 140, 141 and 160 generates the respective call event messages in dependence of signaling information detected during the establishment of a call, its maintenance and its termination or interruption and/or in dependence of predefined user activities. The signaling information in turn depends on the signaling system used by the mobile network 20, the fixed network 30 and the Internet 40.

It is known, that at least some of the call event messages or entries stored in a call history list can be optically and/or acoustically output by the respective telephony-capable terminal device to the respective user. Such specific information may comprise for example the starting point of the call, an indication that a call has been missed, a calling number, the duration of the call and, if a call has been missed, an announcement that a voicemail is available, which is for example stored on the voicemail system 31.

Alternatively, network elements, e.g. switching devices, or routers of the mobile network 20 and/or the internet and/or local and trunk exchanges of the fixed network 30 can be configured to generate for incoming and/or outgoing telephone calls in dependence of generated billing information at least one call event message and to transmit each of the generated call event message via an IP-based data connection to the first cloud-based computing system 110.

In addition or in case, that the telephony-capable terminal devices 70, 80 and 140 are not configured to transmit call event messages via IP-based data connections to the cloud-based computing system 110, a further communication device, e.g. the smart speaker 90 and/or the notebook 141 can be configured to read out the local call history list and the call event data stored on the telephony-capable terminal devices 70, 80 and the telephony-capable terminal device 140, respectively. Preferably, the notebook 141 is configured to perform a data backup, read out the call history list and the call event data information from it and transmit them in call event messages to the first cloud-based computing system 110.

In addition or alternatively, call event messages can be transmitted first from the telephony-capable terminal devices 70, 80, 140 and/or 160 and/or the notebook 141 and/or the smart speaker 90 to another cloud service implemented on a third cloud-based computing system 120, which comprises at least one controller 121, at least one storage and at least one IP-based communication interface 123. Next, the cloud service implemented on a third cloud-based computing system 120 can be configured to send the received call event messages in a push or pull mode to the cloud-based computing system 110.

A call event message preferably may comprise several different data or information elements stored in separate data fields.

Now, the three exemplary different dataset formats A, B and C as mentioned above and their possible preferred data fields are now described. Preferably, call event messages are sent to cloud-based computing system 110 using the predefined dataset format A, stored in the database 113 using the second predefined dataset format B and provided for transmission using the third predefined dataset format C.

In order to guarantee robust use of the dataset formats, their fields are not assigned differently on a case-by-case basis, but in a fixed and predefined order.

Now, the different dataset formats, their different data fields and the different information elements recordable in the respective data fields are now described.

### UserID field: used in dataset formats A, B, C

The UserID data field includes as an information element the identification ID of the user the respective call event message belongs to.

### OwnNumber field: used in dataset formats A, B, C

This field may include as an information element an own number of the user, because a user, e.g. the first user, can have several call numbers, e.g. a mobile number of the smartphone 140 and at least one call number with respect to the user's home network 50. This field shows, which call or phone number a caller used to call someone. Under certain circumstances, the calling telephony-capable terminal device, e.g. the DECT telephone 101 may not know its own call number because a downstream device, e.g. the DECT base station 100 first determines the call number. In such a case, the value **"unknown"** is indicated.

### OwnNumberAnonymised field: used in dataset formats A, B, C

In the case of outgoing calls, the user must provide a call number to the operator, but can determine that the call number is not signaled to a called party (exceptions to this are usually only emergency services). In this case, the information element **"anonymous"** can be transmitted in the OwnNumberAnonymised field.

### PartnerNumber field: used in dataset formats A, B, C

In this field the call number of the communication partner with whom the user has communicated can be recorded as an information element. In the case of an incoming call, this is the call number of the calling party; if the user has made an outgoing call, this is the call number of the called party. The partner number is always known for outgoing calls, but for incoming calls there can be several reasons why it is not present when an event is reported. If the caller deliberately suppresses it and thus does not transmit it, this is indicated as **"anonymous".** However, if the value is not yet available during the technical transmission (DECT often uses fast signaling for ringing and only delivers all available data with a delay), this is indicated as **"unknown",** as with the OwnNumber.

### Direction field: used in dataset formats A, B, C

Direction of a call is either **"incoming"** or **"outgoing".** This can be recorded in the direction field as a further information element. Since a telephone system (e.g. the DECT base station 100) can also switch telephone calls internally, this would lead to two entries depending on the user considered. For this reason, the value **"internal"** is used. In order to distinguish between the calling party and the called party, the call number of calling party is stored in OwnNumber field and the call number of the called party is stored in the PartnerNumber field.

### Type field: used in dataset format A

The type of a call can be transmitted in this field as an information element. The type of the call may be "internal", "external" or "control code" and can be transmitted during an event signaling. This means that the values "incoming" or "outgoing" can still be used in the Direction field. The default value "external" serves as a counterpart, so that it can be omitted. Finally, there is the value "control code" to indicate that not a call number is used, but a USSD code known in mobile telephony.

### State field: used in dataset formats A, B, C

The following information elements or terms indicate event types if used in the dataset format A and a state of a respective call if used in the dataset formats B and C.
- **"initiated"**: The call attempt begins (at caller: Start Call, at called party: Start Ringing).
- **"accepted"**: Indicating that after "initiated", that the call has been accepted by the called party (at caller: Call Begins, at called party: Accept Call).
- **"completed"**: indicates after "accepted", the end of a call or an ended call depending on who hung up.
- **"aborted"**: after "initiated" when the caller party has hung up (caller: End Call, called party: Call Ended).
- **"rejected"**: after "initiated" when the called party actively rejected the call by pressing a button or not picked up the phone during a predefined time interval and his/her telephony-capable terminal device automatically rejects the call.(caller: Call Ended, called party: End Call).
- **"forwarded"**: Some terminals devices actively recognize or forward a call (e.g. to a voice mail system) or their operator does this if, for example, the call is not accepted after some time - if this is not recognized, the terminal can only report an "aborted" or "rejected".

### InitialTimestamp field: used in dataset formats A, B

The local time, i.e. the initial timestamp, of the first call event message is recorded as an information element in this field. It is taken over unchanged for every further event of the same call and stored in the storage or database 113 of the cloud-based computing system 110.

### CurrentTimestamp field: used in dataset format A

The current timestamp is the local time of the current call event message, which is transmitted as an information element in this field to the cloud-based computing system 110 and stored in the storage or database 113 of the cloud-based computing system 110. For the first call event message, this timestamp corresponds to the value recorded in the InitialTimestamp field.

### IntermediateTimestamp field: used in dataset format B

A current timestamp transmitted in the CurrentTimestamp field of an dataset format A is stored as an information element in this field in the database 113 for events with state "accepted" or with state "forwarded" if the direction is "outgoing" or "internal".

### FinalTimestamp field: used in dataset format B

A current timestamp transmitted in the CurrentTimestamp field of a dataset format A, which relates to events with the state "completed", "aborted" and "rejected" is stored as an information element in this field in the database 113 - and with respect to an event with the state "forwareded" only if the direction is "incoming". If the timestamp in the IntermediateTimestamp field is not yet set for a state "completed", the timestamp in the InitialTimestamp field is now stored in the IntermediateTimestamp field also

### CallDuration field: used in dataset formats B, C

The information element in this field indicates the duration of a call in seconds. Default is 0, and only in the state "completed" the duration is calculated at the cloud-based computing system 110 as the difference between the value in the FinalTimestamp field and the value in the IntermediateTimestamp field.

In other words:
- The dataset format A used for call event messages to be transmitted to the cloud-based computing system 110 comprises in a predefined and fixed order preferably a UserID field and a State field, and optionally an OwnNumber field, and/or an OwnNumberAnonymised field,and/or a PartnerNumber field, and/or a Direction field, and/or a Type field, and/or an InitialTimestamp field, and/or a CurrentTimestamp field.
- The dataset format B used by the cloud-based computing system 110 for storing received call event messages may comprise in a predefined and fixed order preferably a UserID field and a State field and optionally an OwnNumber field, and/or an OwnNumberAnonymised field, and/or PartnerNumber field, and/or Direction field, and/or an InitialTimestamp field, and/or an IntemediateTimestamp field, and/or a FinalTimestamp field and/or a CallDuration field.
- The dataset format C used by the cloud-based computing system 110 for providing and transmitting stored call event messages may comprise in predefined and a fixed order preferably a UserID field and a State field, and/or an OwnNumber field, and/or an OwnNumberAnonymised field, and/or a PartnerNumber field, and/or a Direction field, , and/or a CallDuration field.

It should be noted that call event messages can be transmitted in proprietary dataset formats, but in this case the proprietary dataset formats have to be transformed into the dataset format A prior to processing it by the cloud-based computing system 110. In a similar way, call event messages provided by the cloud-computing system 110 for transmitting in the dataset format C can be transformed into a proprietary dataset format. The respective transformation procedure can be performed elsewhere between the cloud-based computing system 110 and the respective source and/or receiving devices, for example by the cloud-based computing system 110 itself.

Preferably, for private connections, the user identification and an initial timestamp transmitted in a call event message are usually sufficient for the cloud-based computing system 110 to correlate different call event messages received from the same source, e.g. from the smartphone 140, by comparing the initial timestamps and the user ID included in the received call event message at the cloud-based computing system 110. The reason is that each call event message includes the identical initial timestamp. However, if several sources, for example the ISDN telephone 70, the VoIP telephone 80 and the DECT telephone 101 deliver call event messages for the same call, the initial timestamp included in the respective call event message from the several sources may be different. Therefore, a time interval of +/- X milliseconds must be considered by the cloud-based computing system 110, when comparing the user ID call event message and the respective initial timestamps to prove a correlation between the received from the several source. In practice, 550 ms has proven to be a good value for this, but it can also be adjusted per User ID in order to compensate for special terminal constellations.

The dataset formats A and B might comprise at least one of the further exemplary data fields:
EventCreatorID field:
   This field may include as an information element a unique identification of the device, e.g. one of the telephony-capable terminal devices 140, 70, 80, 101 or the router 60 or the smart speaker 90 each associated with the first user, or the telephony-capable terminal device 160 of the second user, or the cloud-based computing system 120 or respective network elements of the telecommunication system 10, sending the respective call history message and the respective call event message, respectively, to the cloud-based computing system 110.
AccessCountryCode field:
   This field may include as an information element the ITU country code of the respective call.
AccessAreaCode field:
   This field may include as an information element the national destination code of the respective call.
CallID field:
   In this field a unique identification of the respective call, which has been initiated, can be recorded as an information element.

If the EventCreatorID field, and/or the CallID field, and/or the AccessCountryCode and/or the AccessAreaCode field are implemented and filled respectively, the cloud-based computing system 110 is able to uniquely associate received call event message with the respected call they belong to. However, the method can work sufficiently reliable with less data. Basically it is sufficient to use for example the UserID field, the Direction field, the InitialTimestamp field and the State field

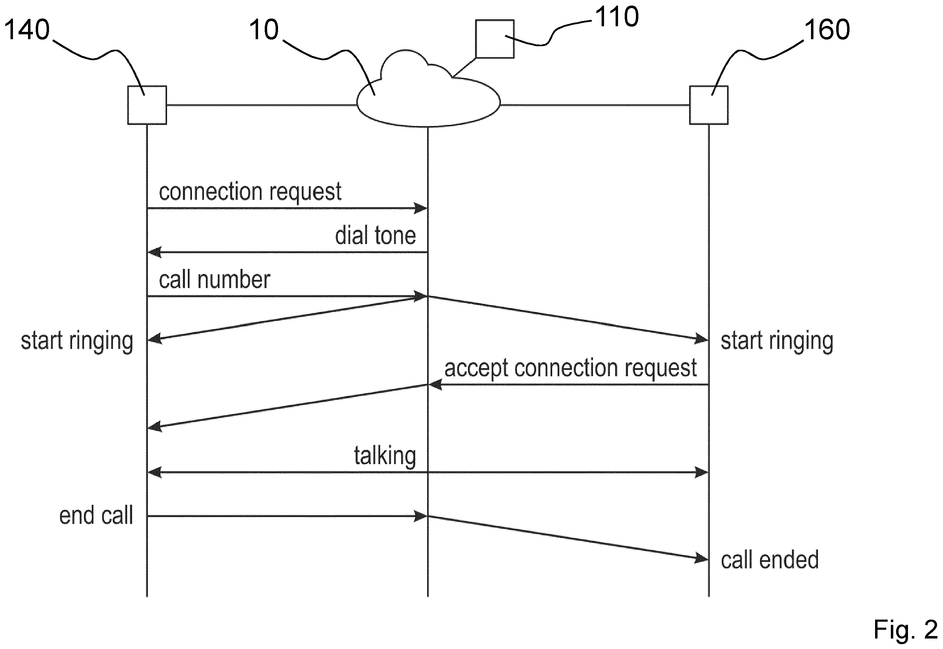

Now, a first exemplary scenario is described in connection with Figure 2, which refers to a call between the smartphone 140 of the first user and the SIP-capable telephone 160 of the second user. The call is initiated at the smartphone 140.

Furthermore, it is assumed that both the smartphone 140 and the SIP telephone 160 are configured to generate for an incoming and/or outgoing telephone call at least one call event message and to transmit each of the generated call event message via an IP-based data connection through the telecommunication system 10 to the first cloud-based computing system 110, wherein each generated call event message is transmitted using the first dataset format A. However, only for illustration purposes the first dataset format A used in this scenario comprises only a UserID field, an OwnNumber field, a PartnerNumber field, a Direction field, a State field, an InitialTimestamp field and a CurrentTimestamp field.

It is further assumed, that received call event messages are stored in a second predefined dataset format B in the database 113 of the cloud-based computing system 11. To be in compliance with the exemplary dataset format A the second predefined dataset format B used in this scenario only comprises a UserID field, an OwnNumber field, a PartnerNumber field, a Direction field, a State field, an IntermediateTimestamp field, a FinalTimestamp field and a CallDuration field. Moreover, it is assumed that call event messages stored in the database 11 are provided for transmission in a third dataset format C which comprises for example a UserID field, an OwnNumber field, a PartnerNumber field, a Direction field, a State field and a CallDuration field to be in compliance with the exemplary dataset formats A and B .

Now a call is initiated by the first user at the smartphone 140 by transmitting, for example a call request to the telecommunication system 10, which operates in an known manner to process, if necessary to transform, and exchange signaling information between the networks 20, 30 and 40 and telephony-capable terminal devices 140, 160 involved in that call. A call request for example can be an invite message according to the SIP protocol, which for example is triggered by "picking up" the smartphone

In response to the call request, a dial tone may be sent from the telecommunication system 10 to the smartphone 140. Next, the call number of the called party, i.e. the second user of the SIP telephone 160, is entered on the smartphone 140.

In a preferred implementation, the smartphone 140 generates in response to the entered call number a first call event message, which comprises in the UserID field the unique identification of the first user, in the OwnNumber field the call number of the first user, in the PartnerNumber field the call number of the second user, in the Direction field the value "outgoing", in the State field the value "initiated", in the InitialTimestamp field the local time of the first call event, which corresponds substantially to the time of entering the call number, and in the CurrentTimestamp field the local time of the first call event, recorded in the InitialTimestamp field.

Next, the first call event message is transmitted by the smartphone 140 using IP-packets via its mobile network 20 and the Internet 40 to the cloud-based computing system 110. The first call event message is stored in the database 113 in a call history list associated with the first user, wherein the information elements of the first call event message are stored in the respective data fields of the second dataset format B. It is to be noted, that the timestamp transmitted in the CurrentTimestamp field of the dataset format A of the first call event message is stored in the IntermediateTimestamp field of the dataset format B, whereas the data recorded in the FinalTimestamp field and the CallDuration field of the dataset format B are preferably set to a default value.

Furthermore, in response to the entered call number, the telecommunication system 10 sends signaling information for starting the ringing procedure in both the smartphone 140 and the SIP telephone 160.

According to an exemplary implementation, the SIP telephone 160 generates in response to the ringing a first call event message, which comprises in the UserID field the unique identification of the second user, in the OwnNumber field the call number of the second user, in the PartnerNumber field the call number of the first user, in the Direction field the value "incoming", in the State field the value "initiated", in the InitialTimestamp field the local time of the first call event, which corresponds substantially to the beginning of the ringing at the SIP telephone 160, and in the CurrentTimestamp field the local time of the first call event, recorded in the InitialTimestamp field.

The first call event message is then transmitted by the SIP telephone 160 using IP-packets via the Internet 40 to the cloud-based computing system 110, wherein the information elements of the first call event message are stored in the database 113 in a call history list associated with the second user, wherein the information elements of the first call event message are stored in the respective data fields of the second dataset format B. It is to be noted, that the timestamp transmitted in the CurrentTimestamp field of the dataset format A of the first call event message is stored in the IntermediateTimestamp field of the dataset format B, whereas the information elements in the FinalTimestamp field and the CallDuration field of the dataset format B are preferably set to a default value.

If the call request is accepted by the second user, for example, by picking up his SIP telephone 160, the SIP telephone 160 generates in response thereto a second call event message, which only differs from the first call event message in that the information element "accepted" is recorded in the State field and the local time of the current call event is recorded in the CurrentTimestamp field.

The second call history message is then transmitted by the SIP telephone 160 using IP-packets via the Internet 40 to the cloud-based computing system 110. In a preferred embodiment, the cloud-based computing system 110 can be configured to check whether the received second call event message correlates with an already stored call event message. This can be done, for example by comparing the information elements recorded in the UserID fields and in the Initialtimestamp fields and, if implemented in the OwnNumber fields and in the PartnerNumber fields of the first and second call event message. In the present case, a correlation between the first and second call event messages is detected. As a result, the call history list of the second user is updated by storing the information elements of second call event message in a similar manner as described with respect to the first call event message.

Now, both the smartphone 140 and the SIP telephone 160 are connected and the first and second user can start talking to each other as shown in Figure 2.

The smartphone 140 also could sent an accepted event for its history list, but in the example we skip this to show the robustness of the process - since the missing intermediate timestamp will be set by the final (next) call event message.

Next, the established call can be terminated by the first or second user for example by hanging up the smartphone 140 and the SIP telephone 160, respectively. It is assumed, that the first user hangs up and the smartphone 140 signals the end of the call to the telecommunication system 10, which in turn signals the end of the call to the second user.

In response to the hanging up action the smartphone 140 generates a second call event message, which comprises in the UserID field the unique identification of the first user, in the OwnNumber field the call number of the first user, in the PartnerNumber field the call number of the second user, in the Direction field the value "outgoing", in the tState field the information element "completed", in the InitialTimestamp field the local time of the first call event, which corresponds substantially to the time of entering the call number, and in the CurrentTimestamp field the local time of the hang up action which terminates the call.

The second call event message is then transmitted by the smartphone 140 using IP-packets via its mobile network 20 and the Internet 40 to the cloud-based computing system 110. In a preferred embodiment, the cloud-based computing system 110 can be configured to check whether the received second call event message correlates with an already stored call event message. This can be done, for example by comparing the information elements recorded in the UserID fields and in the Initialtimestamp fields and, if implemented in the OwnNumber fields and in the PartnerNumber fields of the first and second call event message. In the present case, a correlation between the first and second call event messages is detected. As a result, the call history list of the first user is updated by storing the information elements of second call event message in a similar manner as described with respect to the first call event message. However, the timestamp transmitted in the CurrentTime field of the second event message is now stored in the FinalTimestamp field of the dataset format B and the IntermediateTimestamp is not set yet in this case, the Initialtimestamp is now also stored in the IntermediateTimestamp.

Next, the cloud-based computing system 110 can be configured to determine the duration of the respective telephone call with respect to the smartphone 140 in dependence of the timestamp stored in the IntermediateTimestamp field and the timestamp stored in the FinalTimestamp field of the dataset format B, which are stored in the call history list associated with the first user. The duration value is then stored in the CallDuration field of the dataset format B in the call history list associated with the first user.

Once the call end has been signaled to the SIP telephone 160 a third call event message can be generated by the SIP telephone 160, which comprises in the UserID field the unique identification of the second user, in the OwnNumber field the call number of the second user, in the PartnerNumber field the call number of the first user, in the Direction field the value "incoming", in the State field the information element "completed", in the InitialTimestamp field the local time of the first call event, which corresponds substantially to the time of entering the call number, and in the CurrentTimestamp field the local time of the call termination signal.

The third call event message is then transmitted by the SIP telephone 160 via the Internet 40 to the cloud-based computing system 110. In a preferred embodiment, the cloud-based computing system 110 can be configured to check whether the received third call event message correlates with an already stored call event message. This can be done, for example by comparing the information elements recorded in the UserID fields and in the Initialtimestamp fields and, if implemented in the OwnNumber fields and in the PartnerNumber fields of the first and second call event message. In the present case, a correlation between the first, second and third call event messages is detected. As a result, the call history list of the second user is updated by storing the information elements of third call event message in a similar manner as described with respect to the first and second call event message. However, the timestamp transmitted in the CurrentTime field of the second event message is now stored in the FinalTimestamp field of the dataset format B.

Next, the cloud-based computing system 110 can be configured to determine the duration of the respective telephone call with respect to the SIP telephone 160 in dependence of the timestamp stored in the InitialTimestamp field and the timestamp stored in the FinalTimestamp field of the dataset format B which are stored in the call history list associated with the second user. The duration value is then stored in the CallDuration field of the dataset format B in the call history list associated with the second user.

In a preferred embodiment, the call history lists of the first and second user and at least some of their respective entries can be provided for transmission in respective call event messages using the dataset format C. For example, both the smartphone 140 and the SIP telephone 160 can be configured to request the cloud-based computing system 110 to send the complete call history list of the first user and of the second user, respectively, or only selected information elements of the call history list of the first user and the second user, respectively. In dependence of the implementation, the cloud-based computing system 130 can be configured to request the cloud-based computing system 110 to send call event messages preferable in the third dataset format C with respect to the complete call history list of the first user and/or of the second user, respectively, or with respect to selected information elements of the call history list of the first user and the second user, respectively. The cloud-based computing system 130 can be configured to forward the respective call event messages received to selected destination devices, for example to the smartphone 140 and/or to the SIP telephone 160.

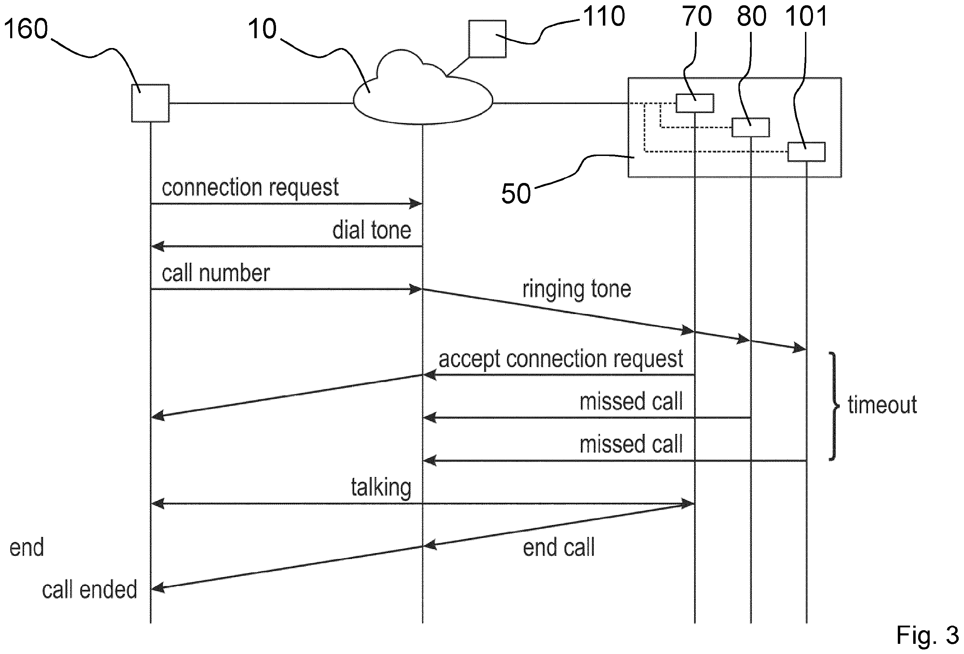

Now a second exemplary scenario is described in connection with Figure 3 to illustrate why and how the cloud-based computing system 110 can be configured to check the consistency or inconsistency of the entries or information elements stored for example in a call history list associated with the first user.

Now, it is assumed, that a call shall be established between the SIP telephone 160 and the home network 50 of the first user.

Furthermore, it is assumed for simplicity only, that the SIP telephone 160, and the telephony-capable terminal devices 70, 80 and 101 are each configured to generate for an incoming and/or outgoing telephone call at least one call event message and to transmit each of the generated call event message via an IP-based data connection over the telecommunication system 10 to the first cloud-based computing system 110.

In addition, it is assumed that the dataset formats A, B and C as defined in the first scenario are used in this scenario as well.

Now a call is initiated by the second user at the SIP telephone 160 by transmitting, for example a call request to the telecommunication system 10, which operates in an known manner to process, transform, if necessary, and exchange signaling information between the networks 20, 30 and 40 and telephony-capable terminal devices 160, 70, 80 and 101 involved in that call. A call request for example can be an invite message according to the SIP protocol, which for example is triggered by "picking up" the SIP telephone 160.

In response to the call request, a dial tone may be sent from the telecommunication system 10 to the SIP telephone 160. Next, the call number of the called party, i.e. the first user is entered on the SIP telephone 160.

In a preferred implementation, the SIP telephone 160 generates in response to the entered call number a first call event message, which comprises in the UserID field the unique identification of the second user, in the OwnNumber field the call number of the second user, in the PartnerNumber field the call number of the first user, in the Direction field the value "outgoing", in the State field the value "initiated", in the InitialTimestamp field the local time of the first call event, which corresponds substantially to the time of entering the call number, and in the CurrentTimestamp field the local time of the first call event, recorded in the InitialTimestamp field.

Next, the first call event message is transmitted by the SIP telephone 160 via the Internet 40 to the cloud-based computing system 110. The first call event message is stored in the database 113 in a call history list associated with the second user, wherein the information elements of the first call event message are stored in the respective data fields of the second dataset format B. It is to be noted, that the timestamp transmitted in the CurrentTimestamp field of the dataset format A of the first call event message is stored in the IntermediateTimestamp field of the dataset format B, whereas the data in the FinalTimestamp field and the CallDuration field of the dataset format B are preferably set to a default value.

Furthermore, in response to the entered call number, the telecommunication system 10 sends signaling information for starting the ringing procedure in the called telephony-capable terminal devices 70, 80 and 101 as shown in Figure 3.

According to an exemplary implementation, each of the telephony-capable terminal devices 70, 80 and 101 generate in response to the ringing a first call event message, which comprises in the UserID field the unique identification of the first user, in the OwnNumber field the call number of the first user, in the PartnerNumber field the call number of the second user, in the Direction field the value "incoming", in the State field the value "initiated", in the InitialTimestamp field the local time of the first call event, which corresponds substantially to the beginning of the ringing at the respective telephony-capable terminal devices 70, 80 and 101, and in the CurrentTimestamp field the local time of the first call event, recorded in the InitialTimestamp field. In order to may differ the telephony-capable terminal devices 70, 80 and 101 the dataset format A used can further comprise an EventCreatorID field transmitting a respective unique identification of the respective telephony-capable terminal devices 70, 80 and 101

Each of the first call event message is then transmitted by each of the telephony-capable terminal devices 70, 80 and 101 via the fixed network 30 and the Internet 40 to the cloud-based computing system 110, wherein the information elements of each of the first call event messages are stored in the database 113 in a call history list associated with the first user, in a manner as illustrated above with respect to the first scenario.

Now it is assumed, that the call request is accepted by the first user, for example, by picking up his telephony-capable terminal device 70 as shown in Figure 3. Therefore, the telephony-capable terminal device 70 generates in response thereto a second call event message, which only differs from the first call event message in that the information element "accepted" is recorded in the State field and the local time of the current call event is recorded in the CurrentTimestamp field.

The second call history message is then transmitted by the telephony-capable terminal device 70 via the fixed network 30 and the Internet 40 to the cloud-based computing system 110. In a preferred embodiment, the cloud-based computing system 110 can be configured to check whether the received second call event message correlates with an already stored call event message. This can be done, for example by comparing the information elements recorded in the UserID fields and in the Initialtimestamp fields and, if implemented in the OwnNumber fields, in the PartnerNumber fields and/or the EventReatorlD field of the first and second call event message. In the present case, a correlation between the first and second call event messages is detected. As a result, the call history list of the first user is updated by storing the information elements of the second call event message in a similar manner as described with respect to the first call event message.

In response to a stop ringing command both the telephony-capable terminal devices 80 and 101 generate a second call event message, which only differs from the first call event message in that the information element "aborted" is recorded in the State field, because from their perspective the other side stopped calling them, and the local time of the current call event is recorded in the CurrentTimestamp field.

Each of the second call event messages are then transmitted by the telephony-capable terminal devices 80 and 101 via the fixed network 30 and the Internet 40 to the cloud-based computing system 110. In a preferred embodiment, the cloud-based computing system 110 can be configured to check whether the received second call event messages correlates with an already stored call event message. This can be done, for example by comparing the information elements recorded in the UserID fields and in the Initialtimestamp fields and, if implemented in the OwnNumber fields and in the PartnerNumber fields of the first and second call event message. In the present case, a correlation between the first and second call event messages is detected. As a result, the call history list of the first user is updated by storing the information elements of second call event message in a similar manner as described with respect to the first call event message.

Now, it is assumed, that the cloud-based computing system 110 is configured to further check, whether the entries or information elements stored in the call history list associated with the first user are consistent. In the present case, an inconsistency is detected by the cloud-based computing system 110, because the second call event messages include different information elements in the respective State fields, i.e. an "accepted" state with respect to the telephony-capable terminal device 70 and a "aborted" state with respect to the telephony-capable terminal devices 80 and 101.

It is to be noted, that the received call event messages, each of which relates to the respective call and to the telephony-capable terminal devices 70, 80 and 101 involved therein, are transformed in the dataset format B and stored in the database 113, to be consolidated by the cloud-based computing system 110 to one entry representing this call in dataset format C. To overcome the inconsistency between the call event messages, each of which relates to the respective call and to the telephony-capable terminal devices 70, 80 and 101 involved therein, the cloud-based computing system 110 is, for this example, configured to consolidate the information element of the State field for this call in the dataset format C as "accepted". With other words: The call event messages, each of which relates to the respective call and to the telephony-capable terminal devices 70, 80 and 101 involved therein, are checked by the first cloud-based computing system 110 for consistency and if an inconsistency, as above, is detected a single consistent call event message is generated for the respective call by the first cloud-based computing system 110.

Now, both the SIP telephone 160 and the telephony-capable terminal device 70 are connected and the first and second user can start talking to each other as shown in Figure 3.

The call termination procedure - signaling and generating and transmitting further call event messages by the SIP-telephone 160 and at least by the telephony-capable terminal devices 70 - and the respective call event messages transmitted to the cloud-based computing system 110 are similar to that illustrated with respect to the first scenario. Therefore, this process is not illustrated for that call.

## Claims

1. A method for centrally storing at least one user related call history list in a first cloud-based computing system (110) comprising at least one storage (113), at least one control unit (112) and at least one IP-based communication interface (111), wherein the cloud-based computing system (110) is configured to be connectable to a telecommunication system (10), which is configured to handle telephone calls, wherein the method preferably comprises the steps of:
a) Generating for an incoming and/or outgoing telephone call with respect to at least one telephony-capable terminal device (140, 70, 80, 101) connectable to the telecommunication system (10) and associated with a user at least one call event message, each call event message including a unique identification of the respective user and an event type indicating a specific state of the respective telephone call;
b) Transmitting, via an IP-based data connection, each of the call event message generated at step a) to the first cloud-based computing system (110); and
c) Storing, in the at least one storage (113) of the first cloud-based computing system (110), each received call event message in dependence of the included unique identification of the respective user in a call history list associated with the respective user.

2. The method of claim 1, further comprising the step of:
d) providing, at the first cloud-based computing system (110), at least one of the call event messages stored at step c) for transmitting via an IP-based data connection to a destination.

3. The method of claim 2, wherein
each call event message transmitted at step b) uses a first predefined dataset format, which comprises a plurality of data fields, each data field is configured to record a separate information element of the respective call event message generated at step a), wherein
each call event message is stored at step c) in a second predefined dataset format, which comprises a plurality of data fields, wherein at least some of said data fields are each configured to record a separate information element of the respective call event message generated at step a), and wherein
the at least one call event message is provided at step d) in a third predefined dataset format, which comprises a plurality of data fields, wherein at least some of said data fields are each configured to record a separate information element of the respective call event message generated at step a), wherein the first, second and third dataset format are different.

4. The method of claim 3, wherein
step a) comprises the step of generating for an incoming and/or outgoing telephone call with respect to at least two telephony-capable terminal devices (140, 70, 80, 101) connectable to the telecommunication system (10) and associated with the respective user a plurality of call event messages, each call event message including a unique identification of the respective user, a unique identification of the respective telephony-capable terminal device of the at least two telephony-capable terminal devices (140, 70, 80, 101) and an event type indicating a specific state of the respective telephone call.

5. The method of claim 3 or 4, wherein,
each call event message stored at step c) is checked by the first cloud-based computing system (110) for consistency and if an inconsistency is detected a single consistent call event message is generated for the respective call by the first cloud-based computing system (110).

6. The method of anyone of the preceding claims, wherein
each call event message generated at step a) comprises the following information elements: an information on the direction of the respective telephone call, wherein the information indicates an incoming telephone call or an outgoing telephone call, a first timestamp associated with the beginning of the respective telephone call.

7. The method of claim 6, wherein
each call event message generated at step a) comprises the following information elements: a call number associated with the respective user and/or a call number associated with a user acting as a communication partner of the respective user.

8. The method of claim 6 or 7, wherein
each call event message generated at step a) comprises the following information elements: a unique identification of the entity, which has generated and/or transmitted the respective call event message, and/or a call identification associated with the respective telephone call and/or a further timestamp indicating the time when the specific state of the respective telephone call occurred.

9. The method of claim 8, comprising the step of
determining, at the first cloud-based computing system (110), with respect to the at least one telephony-capable terminal device (140, 70, 80, 101) associated with the respective user the duration of the respective telephone call in dependence of the first timestamp and the further timestamp and
storing the duration in the call history list associated with the respective user, wherein the duration is recorded in predefined data field of a call event message provided at step d).

10. The method of any one of the preceding claims, wherein
steps a) and b) are executed by the at least one telephony-capable terminal device (140, 70, 80, 101) associated with the respective user.

11. The method of any one of the preceding claims, wherein
step a) is executed by the at least one telephony-capable terminal device (140, 70, 80, 101) associated with the respective user and step b) comprises the steps of:
first transmitting, via an IP-based data connection, each of the generated call event message from the at least one telephony-capable terminal device (140, 70, 80, 101) associated with the respective user to a second cloud-based computing system (120) and then transmitting, via an IP-based data connection, each of the generated call event message from the second cloud-based computing system (120) to the first cloud-based computing system (110).

12. The method of any one of the preceding claims, wherein
step a) is executed by the at least one telephony-capable terminal device (140, 70, 80, 101) associated with the respective user and thereafter each call event message generated at step a) is transmitted to a communication device (90, 141) associated with the respective user and step b) comprises the steps of transmitting, via an IP-based data connection, each of the generated call event message from the communication device (90,141to the first cloud-based computing system.

13. The method of any one of the preceding claims, wherein
steps a) and b) are executed by the telecommunication system (10).

14. The method of any one of the preceding claims, wherein
the at least one telephony-capable terminal device (140, 70, 80, 101) associated with the respective user is connected to a home router (60) associated with the respective user and steps a) and b) are executed by the home router (60).

15. The method of anyone of the preceding claims, comprising the steps of:
checking, before executing step c), each call event message by the first cloud-based computing system (110), whether the respective call event message is correlated with at least one call event message already stored in the call history list associated with the respective user and, if a correlation is detected, updating the call history list associated with the respective user.

16. The method of anyone of the preceding claims, wherein
step a) comprises the following steps:
Generating for an incoming and/or outgoing telephone call with respect to the at least one telephony-capable terminal device (140, 70, 80, 101) associated with the respective user
- a first call event message, which comprises a first timestamp indicating the beginning of the respective telephone call and a first predefined event type indicating that the establishment of the respective telephone call has been initiated;
- only if the respective telephone call has not been established, in response thereto a second predefined event message, which comprises a second predefined event type indicating that the establishment of the respective telephone call has been canceled, and/or, if available, generating, if the respective telephone call is an incoming call, a third call event message, which comprises a third predefined event type indicating that the telephone call connection has been forwarded to a voice mail system (31);
- only if the respective telephone call has been established, in response thereto a fourth call event message, which comprises a fourth predefined event type indicating that the respective telephone call has been accepted, and in response to the release of the respective telephone call a fifth call event message, which comprises a fifth predefined event type indicating that the respective telephone call has been terminated and a further timestamp indicating the end of the respective telephone call.
